(19) Europäisches Patentamt
European Patent Office
Office européen des brevets

(11) **EP 3 514 597 A1**

(12) **EUROPEAN PATENT APPLICATION**
published in accordance with Art. 153(4) EPC

(43) Date of publication:
**24.07.2019 Bulletin 2019/30**

(51) Int Cl.:
**G02B 13/04** *(2006.01)*     **G02B 13/18** *(2006.01)*

(21) Application number: **17851012.9**

(86) International application number:
**PCT/JP2017/033452**

(22) Date of filing: **15.09.2017**

(87) International publication number:
**WO 2018/052113 (22.03.2018 Gazette 2018/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **16.09.2016 JP 2016181654**

(71) Applicant: **Nittoh Inc.**
**Suwa-shi, Nagano 392-0131 (JP)**

(72) Inventor: **SAWAMOTO, Akira**
**Suwa-shi**
**Nagano 392-0021 (JP)**

(74) Representative: **Körber, Martin Hans**
**Mitscherlich PartmbB**
**Patent- und Rechtsanwälte**
**Sonnenstrasse 33**
**80331 München (DE)**

(54) **OPTICAL SYSTEM FOR IMAGE CAPTURING AND IMAGE CAPTURING DEVICE**

(57) An optical system (10) for capturing image is provided. The optical system consists of a first lens group (G1) with positive refractive power disposed on an object side (11) with respect to an aperture stop (St) and a second lens group (G2) with negative refractive power disposed on an image plane side (12) with respect to the aperture stop (St). The first lens group (G1) includes, in order from the object side (11), a first sub group (G11) with negative refractive power and a second sub group (G12) with positive refractive power, and the second lens group (G2) includes a third sub group (G21), which includes at least one lens with negative refractive power and at least one lens with positive refractive power, a penultimate positive lens (L10) with positive refractive power, and a final negative meniscus lens (L11).

Fig. 1

**Description**

Technical Field

The present invention relates to an optical system for image capture that can be favorably used in an image capture device, such as a camera.

Background Art

Publication of Japanese patent application No. 2014-85429A discloses an optical system that is wide angle but makes it easy to obtain high-quality images across the entire screen area and makes it easy to favorably maintain a high optical performance, even during image stabilization. This optical system has a focal length that is shorter than the back focus and includes an aperture stop and a lens group that moves in a direction with a component in a direction perpendicular to the optical axis to shift the image forming position in the direction perpendicular to the optical axis. This lens group includes at least one each of a positive lens and a negative lens. The focal length of the entire optical system, a focal length of the lens group, the length along the optical axis from the aperture stop to a lens surface in an image stabilization lens group that is furthest from the aperture stop, and a length along the optical axis from the lens surface closest to the object side to the final lens surface are all set appropriately.

Summary of Invention

In the field of compact digital cameras and mirrorless cameras, there is demand for a lens system (optical system) for image capture that has a short back focus and a large image circle so as to be compatible with a large imaging device. There is demand for an optical system that is a wide-angle lens with a focal length of around 30mm, has a short back focus, gathers a sufficient amount of peripheral light (brightness, illumination), and has a large image circle.

One aspect of the present invention is an optical system for capturing image that consists of a first lens group with positive refractive power disposed on an object side with respect to an aperture stop and a second lens group with negative refractive power disposed on an image plane side with respect to the aperture stop. The first lens group includes a first sub group with negative refractive power and a second sub group with positive refractive power that are disposed in order from the object side. The second lens group includes: (i) a third sub group, which includes at least one lens with negative refractive power and at least one lens with positive refractive power; (ii) a penultimate positive lens with positive refractive power; and (iii) a final negative meniscus lens.

Symmetrical optical systems that are widely used in wide angle lenses are suited to correcting aberrations but tend to gather insufficient peripheral light. A retrofocus-type arrangement makes it easy to gather enough peripheral light, but has a longer back focus. The present optical system has an overall telephoto-type power arrangement and includes, in order from the object side, a first lens group with positive refractive power and a second lens group with negative refractive power. Accordingly, it is easy to shorten the back focus. In addition, the first lens group has a retrofocus-type arrangement of refractive powers and includes a first sub group with negative refractive power and a second sub group with positive refractive power. Accordingly, the first lens group is capable of gathering enough peripheral light, makes it easy to increase the angle of field, and has a power arrangement that is suited to a wide angle lens.

The second lens group disposed on the image plane side of the first lens group with the aperture stop in between is a lens group with weak negative refractive power, and compensates for the insufficient aberration correction of the above retrofocus-type arrangement using a third sub group. The penultimate positive lens with positive refractive power and a final negative meniscus lens are also disposed to the rear of the third sub group and correct aberrations using a power arrangement that is symmetrical with the retrofocus-type arrangement of the first lens group. The light beam is expanded by the final negative meniscus lens, which makes it easy to produce a large image circle. Accordingly, it is possible to provide an optical system that is wide angle, has a short back focus, gathers a sufficient amount of peripheral light, and also has a large image circle.

Another aspect of the present invention is an image capture apparatus (device) including: the optical system described above; and an image pickup device (image capture element) disposed on an image plane side of the optical system. The optical system may be an interchangeable lens, and the expression "image capture device" includes a digital camera, a video camera, a TV camera, an action camera and the like.

Brief Description of Drawings

FIG. 1 depicts an overview of an image capture apparatus including an optical system for image capture.
FIG. 2 depicts lens data of an optical system shown in FIG. 1.
FIG. 3 depicts data on aspherical surfaces of the optical system shown in FIG. 1.
FIG. 4 depicts various aberrations of the optical system shown in FIG. 1.
FIG. 5 depicts transverse aberration of the optical system shown in FIG. 1.
FIG. 6 depicts an overview of an image capture apparatus including another optical system for image capture.
FIG. 7 depicts lens data of the optical system shown in FIG. 6.
FIG. 8 depicts data on aspherical surfaces of the optical system shown in FIG. 6.
FIG. 9 depicts various aberrations of the optical system shown in FIG. 6.
FIG. 10 depicts transverse aberration of the optical system shown in FIG. 6.

Description of Embodiments

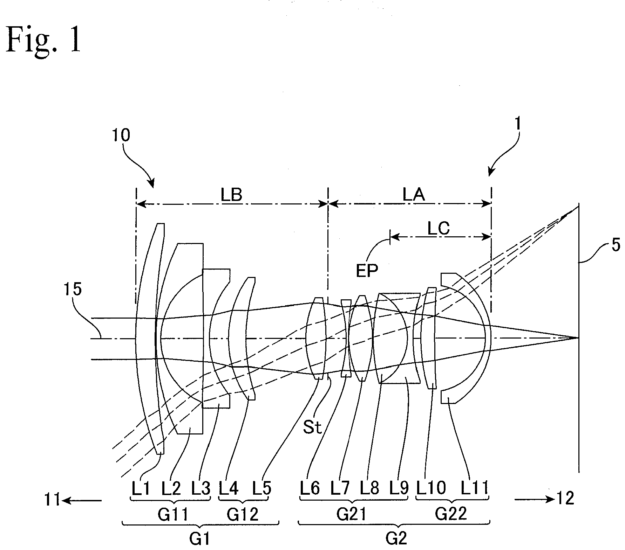

FIG. 1 depicts one example of an image capture apparatus (imaging apparatus, camera, camera device) equipped with an optical system for capturing image. The camera 1 includes an optical system (image capture optical system, image forming optical system, lens system) 10 and an image capture element (imaging element, image capture device image plane) 5 disposed on an image plane side (image side, image capturing side, image forming side, imaging side) of the optical system 10. The optical system 10 consists of a first lens group G1 with overall positive refractive power that is disposed on an object side 11 with respect to an aperture stop (stop) St and a second lens group G2 with overall negative refractive power that is disposed on an image plane side 12 with respect to the aperture stop.
The first lens group G1 includes, in order from the object 11 side, a first subgroup (first sub lens group) G11 that has negative refractive power and a second subgroup (second sub lens group) G12 that has positive refractive power. The second lens group G2 includes a third sub group (third sub lens group) G21, which includes at least one lens with negative refractive power and at least one lens with positive refractive power, and a fourth sub group (fourth sub lens group) G22, which includes a penultimate positive lens L10 that has positive refractive power and a final negative meniscus lens L11.
The optical system 10 as a whole has a telephoto-type arrangement of refractive powers, which makes it easy to achieve a short back focus. In addition, the first lens group G1 has a retrofocus-type arrangement that includes the first sub group G11 with negative refractive power and the second sub group G12 with positive refractive power, which makes it easy to gather a sufficient amount of peripheral light and easy to achieve a wide angle of field.
In the optical system 10, since the first lens group G1 is the retrofocus type, the back focus for the first lens group G1, or in other words, the distance from the aperture stop St to the image plane 5 tends to increase and the second lens group G2 is disposed on the image plane side 12 of the first lens group G1 with the aperture stop St in between. Accordingly, it is possible to make the back focus of the optical system 10 as a whole shorter, and it is possible, by using the second lens group G2, to compensate an aberration correcting performance due to applying a retrofocus arrangement instead of a symmetrical arrangement. In addition, by disposing the penultimate positive lens L10 that has positive refractive power and the final negative meniscus lens L11 to the rear (that is, on the image plane side 12) in the second lens group G2 that has an arrangement of refractive powers symmetrical with the retrofocus arrangement of the first lens group G1 to correct aberrations, the light beam is expanded by the final negative meniscus lens L11 to obtain a larger image circle.
The first subgroup G11 includes a first positive meniscus lens L1 that is disposed most toward (closest to) the object side 11, is convex on the object side 11, and has positive refractive power. In the optical system 10, it is desirable for the distance LA along the optical axis 15 from the aperture stop St to the surface of the image plane side 12 of the final negative meniscus lens L11, the distance LB along the optical axis 15 from the surface of the object side 11 of the first positive meniscus lens L1 to the aperture stop St, and the focal length f of the optical system to satisfy the following Conditions (1) and (2).

$$0.6 < LB/LA < 1.5 \ ... \ (1)$$

$$1.0 < LA/f < 1.7 \ ... \ (2)$$

It is desirable for the upper limit of Condition (1) to be 1.3. It is desirable for the lower limit of Condition (2) to be 1.1 and more desirable for the upper limit to be 1.5.
Below the lower limit of Condition (1), when attempts are made to keep the overall length of the optical system 10 within a certain range, the space for disposing the first lens group G1 becomes relatively tight, which makes it difficult to provide sufficient distances between the lenses and reduces the aberration correcting performance. It also becomes difficult to dispose a lens shutter at the position of the aperture stop St. When the upper limit of Condition (1) is exceeded, conversely the space for disposing the second lens group G2 becomes smaller, which makes it difficult to provide sufficient distances between the lenses and reduces the aberration correcting performance. In particular, if the distance between the lenses L10 and L11 is not enough, correction of curvature of field and coma aberration is insufficient. Accordingly, to form incident light with a wide angle of field into a large image circle, it is desirable for the length of the first lens group G1 and the length of the second lens group G2 disposed on the respective sides of the aperture stop St to be substantially equal, that is, within the range of Condition (1).

Below the lower limit of Condition (2), the space for disposing the second lens group G2 becomes tight, which makes it difficult to provide sufficient distances between the lenses and reduces the aberration correcting performance. When the upper limit of Condition (2) is exceeded, the overall length of the optical system 10 becomes long, which makes it difficult to provide a compact optical system 10.

In the optical system 10, it is desirable for the combined focal length f1 of the first lens group G1 and the combined focal length fn of the first sub group G11 to satisfy the following Condition (3).

$$0.4 < |fn|/f1 < 0.7 \ldots (3)$$

It is preferable for the lower limit of Condition (3) to be 0.5. Below the lower limit of Condition (3), the negative refractive power of the first sub group G11 of the first lens group G1 that has a retrofocus-type arrangement of refractive powers is insufficient, and the space from the aperture stop St to the image plane 5 becomes tighter, which makes it difficult to dispose the second lens group G2. On the other hand, when the upper limit of Condition (3) is exceeded, the negative refractive power of the first sub group G11 is too strong, which makes it difficult to correct aberrations.

In the optical system 10, it is desirable for the combined focal length f1 of the first lens group G1 and the combined focal length f2 of the second lens group G2 to satisfy the following Condition (4).

$$-0.23 < f1/f2 < -0.04 \ldots (4)$$

The second lens group G2 functions to further correct aberrations that cannot be completely corrected by the first lens group G1. However, below the lower limit of Condition (4), the negative power of the second lens group G2 becomes too strong, making it difficult to correct various aberrations. On the other hand, if the upper limit of Condition (4) is exceeded, the refractive power of the second lens group G2 is too low, so that various aberrations are insufficiently corrected and the optical system 10 tends to become large.

It is also desirable for the air gap (distance) DE between the penultimate positive lens L10 and the final negative meniscus lens L11 and the back focus BF to satisfy Condition (5) below. The air gap DE is the distance along the optical axis 15 between the surface of the image plane side 12 of the lens L10 and the surface of the object side 11 of the lens L11.

$$0.4 < DE/BF < 1.4 \ldots (5)$$

Below the lower limit of Condition (5), the air gap DE is too small and the refractive power of the second lens group G2 is insufficient, so that it is difficult to correct aberrations and the optical system 10 tends to become large. When the upper limit of Condition (5) is exceeded, the radius of the lens L11 becomes too large, which makes the optical system 10 large and also makes it difficult to correct curvature of field.

In the optical system 10, it is also desirable for the distance LC from the exit pupil EP to the surface of the image plane side 12 of the final negative meniscus lens L11 to satisfy the following Condition (6).

$$0.1 < LC/LA < 1.0 \ldots (6)$$

It is preferable for the lower limit of Condition (6) to be 0.4 and preferable for the upper limit to be 0.8. Below the lower limit of Condition (6), the refractive power of the second lens group G2 is too large, which makes it difficult to correct various aberrations. This may also cause an increase in the overall length (that is, the lens length) of the optical system 10 and an increase in the length of the back focus. When the upper limit of Condition (6) is exceeded, the refractive power of the first lens group G1 is too high, the diameter of the lens L1 that is closest to the object side 11 becomes even larger, and that tends to be more fall in lens symmetry, which makes it difficult to correct distortion and curvature of field.

With the optical system 10, it is possible to make the effective diameter of the first positive meniscus lens L1 larger than the effective diameter of the final negative meniscus lens L11, which makes it possible to provide an optical system 10 with a wider angle of field. It is also desirable for a third sub group G21 disposed on the object side 11 in the second lens group G2 to include, in order from the object side 11, a lens L6 with negative refractive power, a lens L7 with positive refractive power, a lens L8 with positive refractive power, and a lens L9 with negative refractive power. By using a symmetrical arrangement, it becomes easy to correct aberrations. The combinations of negative and positive refractive powers in these lenses may be implemented as cemented lenses, or instead of using cemented lenses, both surfaces of a lens may be used for correction. Aspherical surfaces may also be used.

The optical system 10 is a single focus lens system, and during focusing, the first lens group G1 and the second lens group G2 may move independently. In this case, it is desirable for the aperture stop St to move together with the first lens group G1.

The optical system 10 according to the first embodiment shown in FIG. 1 has an overall configuration of eleven lenses, where the first lens group G1 on the object side 11 is composed of five lenses numbered lens L1 to L5 and, on the other side of the aperture stop St, the second lens group G2 disposed on the image plane side 12 is composed of six lenses numbered L6 to L11. The first lens group G1 includes, along the optical axis 15 in order from the object side 11, a meniscus lens (the first positive meniscus lens) L1 that has positive refractive power and is convex on the object side 11, a meniscus lens L2 with negative refractive power that is convex on the object side 11, a biconcave negative lens L3, a meniscus lens L4 with positive refractive power that is convex on the object side 11, and a biconvex positive lens L5. The lenses L1 to L3 construct the first subgroup G11 that has negative refractive power, and the lenses L4 and L5 construct a second subgroup G12 that has positive refractive power.

The second lens group G2 includes, along the optical axis 15 in order from the object side 11, the biconcave negative lens L6, the biconvex positive lens L7, the biconvex positive lens L8, the biconcave negative lens L9, the meniscus lens (that is the penultimate positive lens) L10 that has positive refractive power and is convex on the object side 11, and the meniscus lens (that is the final negative meniscus lens) L11 that has negative refractive power and is convex on the image plane side 12. The combination of the positive lens L8 and the negative lens L9 is a cemented lens and both surfaces S14 and S15 of the biconvex positive lens L7 are aspherical.

During focal point adjustment (that is, focusing) of the optical system 10, the first lens group G1 moves by itself independently of the second lens group G2. The aperture stop St moves together with the first lens group G1. In more detail, during focusing, the first lens group G1 and the second lens group G2 move independently toward the object side 11.

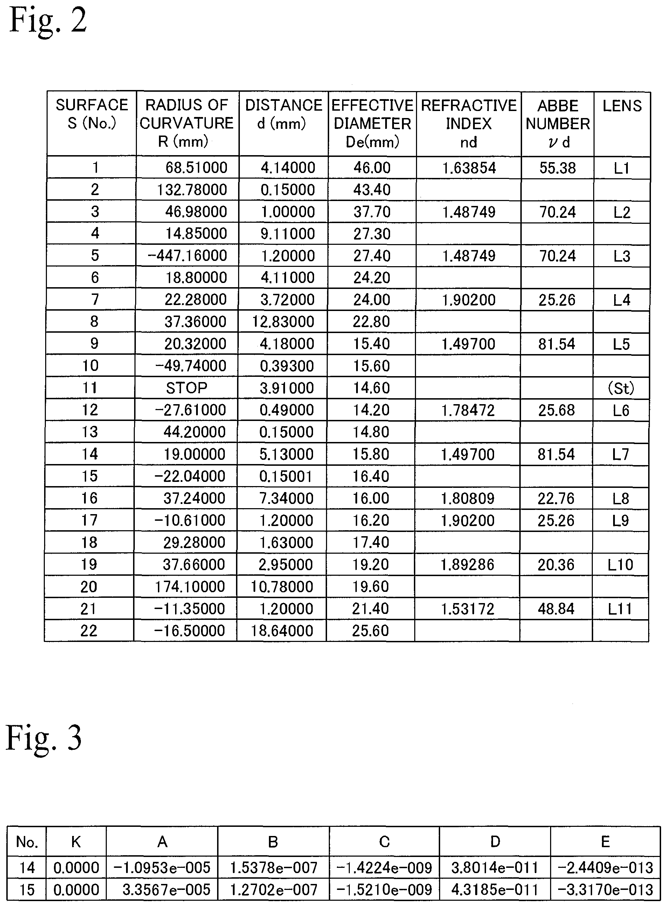

FIG. 2 depicts data on the respective lenses that construct the optical system 10. The "Radius of Curvature (R)" of each surface S (No.) indicates the radius of curvature (in mm) of the respective surfaces of the respective lenses disposed in order from the object side 11, "Distance d" indicates the distance (in mm) between the respective lens surfaces, "Effective Diameter De" indicates the effective diameter (in mm) of each lens surface, "Refractive Index nd" indicates the refractive index (d line) of each lens, and "Abbe number vd" indicates the Abbe number (d line) of each lens. Note that the final interval, in the present embodiment "d22", indicates the distance between the optical system 10 and the image capture device 5 shows the back focus BF. The same also applies to the lens data given later.

FIG. 3 depicts aspherical surface coefficients of both surfaces S14 and S15 of the lens L7. The aspherical surfaces are expressed by the following equation using the coefficients K, A, B, C, D, and E depicted in FIG. 3 with X as the coordinate in the optical axis direction, Y as the coordinate in a direction perpendicular to the optical axis, the direction in which light propagates as positive, and R as the paraxial radius of curvature. The same also applies to the following embodiments. Note that "en" represents "10 to the power n".

$$X=(1/R)Y^2/[1+\{1-(1+K)(1/R)^2Y^2\}^{1/2}]+AY^4+BY^6+CY^8+DY^{10}+EY^{12}$$

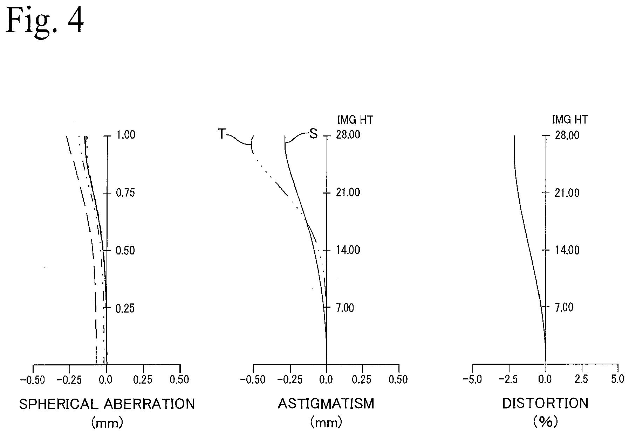

FIG. 4 depicts spherical aberration, astigmatism, and distortion of the optical system 10. Spherical aberration is shown for a wavelength of 406.0000nm (long dash line), a wavelength of 435.8340nm (dot-dot-dash line), a wavelength of 486.1330nm (medium dash line), a wavelength of 546.0740nm (solid line), a wavelength of 587.5620nm (dot-dash line), and a wavelength of 656.2730nm (short dash line). Astigmatism is depicted for tangential rays T and sagittal rays S.

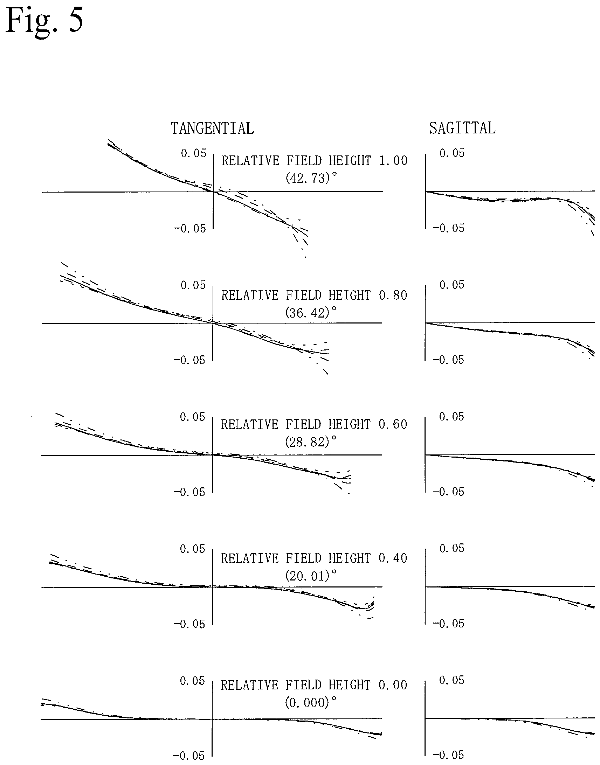

In FIG. 5, chromatic aberration of magnification (transverse aberration) of the optical system 10 is separately depicted for tangential rays and sagittal rays at the wavelength of 435.8340nm (dot-dot-dash line), the wavelength of 486.1330nm (medium dash line), the wavelength of 546.0740nm (solid line), the wavelength of 587.5620nm (dot-dash line), and the wavelength of 656.2730nm (short dash line). This also applies to the aberration diagrams given later.

Numerical values indicating the main performance of the optical system 10 are given below.

Overall combined focal length (f): 30.98 mm (calculated on a d line basis, this also applies below)

F number: 3.5

Maximum angle of field (half-angle): 42.73 degrees
Image circle: $\varphi$56 mm
Back focus (BF): 18.64 mm
Focal length (power, f1) of first lens group G1: 32.3mm
Focal length (power, f2) of second lens group G2: -271.32mm
Focal length of first sub group G11 (fn): -20.98mm
Distance DE (d20): 10.78mm
Distance LA: 34.93 mm
Distance LB: 40.83 mm
Distance LC: 21.39 mm
Condition (1): 1.17
Condition (2): 1.13
Condition (3): 0.65
Condition (4): -0.12
Condition (5): 0.58
Condition (6): 0.61

The optical system (lens system) 10 is a lens system where the first (that is, most toward or closest to the object side 11) positive meniscus lens L1 and the final (that is, most toward or closest to the image plane side 12) negative meniscus lens L11 are disposed at substantially equal distances from the aperture stop St, and a positive meniscus lens L1 with a larger effective diameter than the final negative meniscus lens L11 is disposed at the front. The optical system 10 is a wide-angle lens with a focal length of 30.98 mm and an angle of field (half-angle of 42.73°), has a back focus BF that is short at 18.64 mm, and is also bright with an F-number of 3.5. Even though the back focus BF is short, the image circle is large with a diameter of 56 mm. In addition, the optical system 10 satisfies the various conditions given above and as shown in the aberration graphs, various aberrations are favorably corrected, which makes it possible to obtain sharp images.

With this configuration, the aperture stop St is disposed in substantially the center of the optical system 10, and it is possible to dispose a lens shutter at the location of the aperture stop St. Accordingly, the optical system 10 is a lens system that is suited to a compact digital camera and covers a range from standard focal lengths to wide angle.

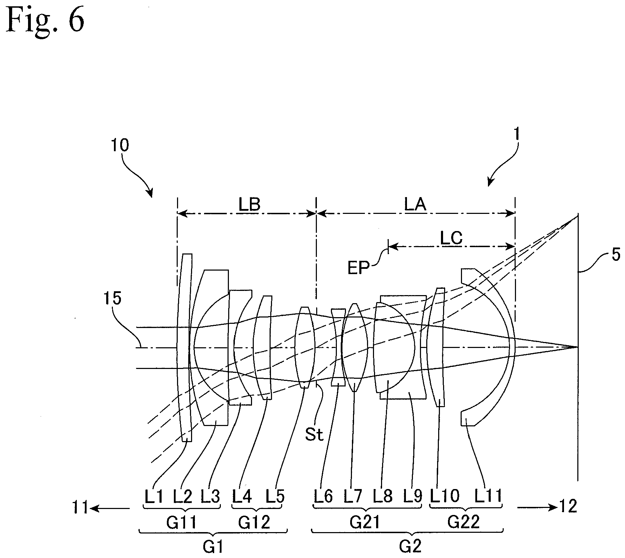

FIG. 6 depicts one example of a camera 1 equipped with a different optical system 10 for image capture. Like the optical system (lens system) according to the first embodiment, this optical system 10 is also a lens system that is suited to covering a range from wide angle to standard focal lengths, and consists of a first lens group G1 that has overall positive refractive power and is disposed on the object side 11 and a second lens group G2 that has overall negative refractive power and is disposed on the image plane side 12, with the aperture stop (stop) St in between the two lens groups.

The first lens group G1 has a five-lens construction and includes, along the optical axis 15 in order from the object side 11, a meniscus lens (the first positive meniscus lens) L1 that is convex on the object side 11 and has positive refractive power, a meniscus lens L2 with negative refractive power that is convex on the object side 11, a meniscus lens L3 with negative refractive power that is convex on the object side 11, a meniscus lens L4 with positive refractive power that is convex on the object side 11, and a biconvex positive lens L5. The lenses L1 to L3 construct a first sub group G11 that has negative refractive power, the lenses L4 and L5 construct a second sub group G12 that has positive refractive power, and the first lens group G1 has an overall retrofocus-type arrangement of refractive powers.

The second lens group G2 has a six-lens construction and includes, along the optical axis 15 in order from the object side 11 (the aperture stop St side), a biconcave negative lens L6, a biconvex positive lens L7, a biconvex positive lens L8, a biconcave negative lens L9, a meniscus lens (the penultimate positive lens) L10 with positive refractive power that is convex on the object side 11, and a meniscus lens (the final negative meniscus lens) L11 with negative refractive power that is convex on the image plane side 12. The combination of the positive lens L8 and the negative lens L9 is a cemented lens, the negative lens L6 and the positive lens L7 are disposed with a minimal air gap (distance), and both surfaces S14 and S15 of the positive lens L7 are aspherical.

The second lens group G2 is a lens group which as a whole has a weak negative refractive power compared to the first lens group G1 and has a function of correcting various aberrations produced by the asymmetric retrofocus-type first lens group G1. The third subgroup G21 on the object side 11 of the second lens group G2 has a symmetrical arrangement of refractive powers with a negative lens L6, a positive lens L7, a positive lens L8, and a negative lens L9 disposed in order from the object side 11, which makes it easy to correct various aberrations including lateral chromatic aberration. The fourth subgroup G22 on the image plane side 12 of the second lens group G2 includes, in order from the object side 11, a positive lens L10, and a meniscus lens L11 that has a negative refractive power and is convex on the image plane side 12, and therefore has an arrangement of refractive powers that is symmetrical to the retrofocus-type arrangement of the first lens group G1. Accordingly, it is easy for the fourth sub group G22 to correct various aberrations produced by the first lens group G1.

In addition, by constructing the lenses closest to the image plane side 12 of the lens L10 that has positive refractive power and the lens L11 that has negative refractive power, it is possible to suppress the lens diameter on the image plane side 12 and form a large image circle. In particular, the lens L11 that is closest to the image plane side 12 is a negative meniscus lens that is convex on the image plane side 12 and forms a facing pair of surfaces with the surface of the image plane side 12 of the lens L10 that is the final positive lens 10 on the iamge plane side 12. By providing these surfaces, it is possible to achieve a sufficient negative refractive power, to provide a sufficient number of surfaces for correcting aberrations, and to suppress an increase in the curvature of field due to the Petzval sum becoming too large.

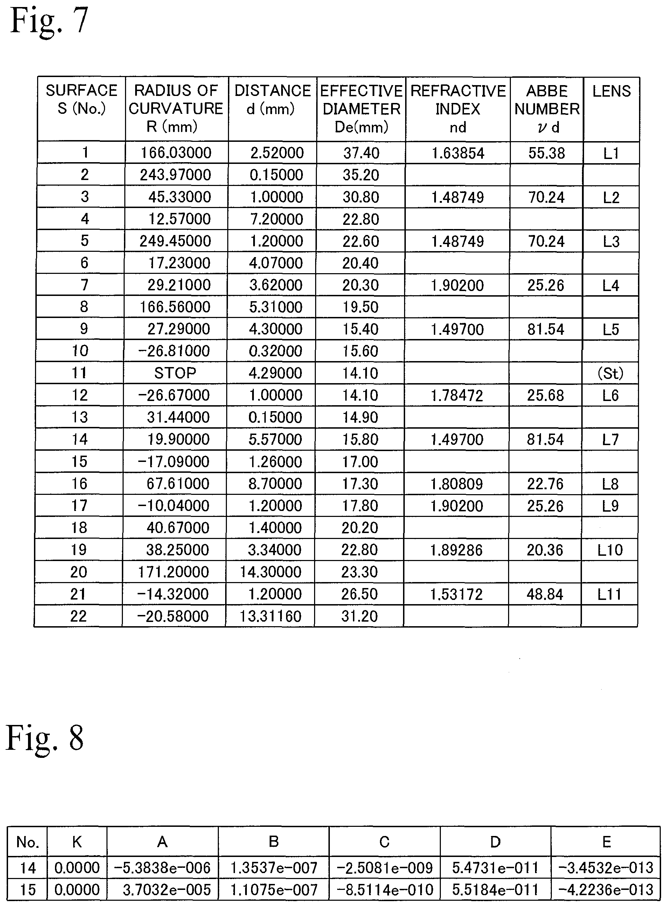

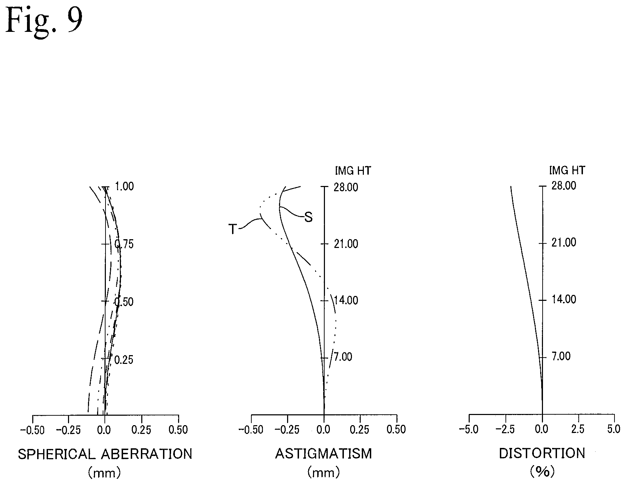

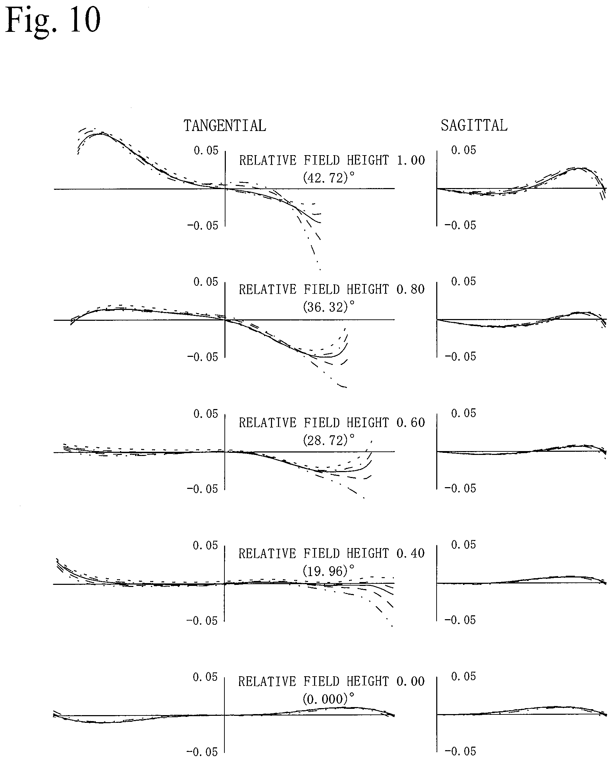

FIG. 7 depicts data on the respective lenses that construct the optical system 10. FIG. 8 depicts data on aspherical surfaces, FIG. 9 depicts spherical aberration, astigmatism, and distortion of the optical system 10, and FIG. 10 depicts chromatic aberration of magnification (transverse aberration) of the optical system 10 separately for tangential rays and sagittal rays.

Numerical values indicating the main performance of the optical system 10 are given below.

Overall combined focal length (f): 31.00 mm

F number: 3.5

Maximum angle of field (half-angle): 42.72 degrees

Image circle: $\varphi$56 mm

Back focus (BF): 13.3 mm

Focal length (power, f1) of first lens group G1: 27.69 mm

Focal length (power, f2) of second lens group G2: -141.38 mm

Focal length of first sub group G11 (fn): -17.24 mm

Distance DE (d20): 14.30 mm

Distance LA: 42.41 mm

Distance LB: 29.69 mm

Distance LC: 26.6 mm

Condition (1): 0.7

Condition (2): 1.37

Condition (3): 0.62

Condition (4): -0.20

Condition (5): 1.07

Condition (6): 0.62

This image capture optical system (imaging optical system) 10 is also an optical system that satisfies all of Conditions (1) to (6), and in spite of having the overall configuration of a telephoto-type optical system, is wide-angle with a short focal length of 31mm, has a wide angle of field with a half angle of 42.72 degrees, is bright with an F-number of 3.5, has a large image circle of 56mm, has a short back focus BF of 13.3mm, and is compact and bright. Also, as shown in the aberration graphs, various aberrations are favorably corrected.

This optical system 10 is also configured with the aperture stop St disposed in substantially the center of the optical system 10 and it is possible to dispose a lens shutter at the location of the aperture stop St. Accordingly, this optical system 10 is also a lens system that is suited to a compact digital camera and mainly covers a wide angle range.

**Claims**

1. An optical system for capturing image consisting of a first lens group with positive refractive power disposed on an object side with respect to an aperture stop and a second lens group with negative refractive power disposed on an image plane side with respect to the aperture stop,
   wherein the first lens group includes a first sub group with negative refractive power and a second sub group with positive refractive power that are disposed in order from the object side, and
   the second lens group includes: a third sub group that includes at least one lens with negative refractive power and at least one lens with positive refractive power; a penultimate positive lens with positive refractive power; and a final negative meniscus lens.

2. The optical system according to claim 1,
   wherein the first sub group includes a first positive meniscus lens with positive refractive power that is disposed most toward the object side and is convex on the object side, and
   a distance LA from the aperture stop to the final negative meniscus lens, a distance LB from the first positive meniscus lens to the aperture stop, and a focal length f of the optical system satisfy conditions below.

$$0.6<LB/LA<1.5$$

$$1.0<LA/f<1.7$$

**3.** The optical system according to claim 2,
wherein an effective diameter of the first positive meniscus lens is larger than an effective diameter of the final negative meniscus lens.

**4.** The optical system according to any one of claims 1 to 3,
wherein a combined focal length f1 of the first lens group and a combined focal length fn of the first sub group satisfy a condition below.

$$0.4<|fn|/f1<0.7$$

**5.** The optical system according to any one of claims 1 to 4,
wherein a combined focal length f1 of the first lens group and a combined focal length f2 of the second lens group satisfy a condition below.

$$-0.23<f1/f2<-0.04$$

**6.** The optical system according to any one of claims 1 to 5,
wherein an air gap DE between the penultimate positive lens and the final negative meniscus lens and a back focus BF satisfy a condition below.

$$0.4<DE/BF<1.4$$

**7.** The optical system according to any one of claims 1 to 6,
wherein a distance LC from an exit pupil to the final negative meniscus lens satisfies a condition below.

$$0.1<LC/LA<1.0$$

**8.** The optical system according to any one of claims 1 to 7,
wherein the third sub group includes, in order from the object side, a lens with negative refractive power, a lens with positive refractive power, a lens with positive refractive power, and a lens with negative refractive power.

**9.** The optical system according to any one of claims 1 to 8,
wherein during focusing, the first lens group and the second lens group move independently and the aperture stop moves together with the first lens group.

**10.** An image capture apparatus comprising:

an optical system according to any one of claims 1 to 9; and
an image capture element disposed on an image plane side of the optical system.

# Fig. 1

# Fig. 2

| SURFACE S (No.) | RADIUS OF CURVATURE R (mm) | DISTANCE d (mm) | EFFECTIVE DIAMETER De(mm) | REFRACTIVE INDEX nd | ABBE NUMBER ν d | LENS |
|---|---|---|---|---|---|---|
| 1 | 68.51000 | 4.14000 | 46.00 | 1.63854 | 55.38 | L1 |
| 2 | 132.78000 | 0.15000 | 43.40 | | | |
| 3 | 46.98000 | 1.00000 | 37.70 | 1.48749 | 70.24 | L2 |
| 4 | 14.85000 | 9.11000 | 27.30 | | | |
| 5 | −447.16000 | 1.20000 | 27.40 | 1.48749 | 70.24 | L3 |
| 6 | 18.80000 | 4.11000 | 24.20 | | | |
| 7 | 22.28000 | 3.72000 | 24.00 | 1.90200 | 25.26 | L4 |
| 8 | 37.36000 | 12.83000 | 22.80 | | | |
| 9 | 20.32000 | 4.18000 | 15.40 | 1.49700 | 81.54 | L5 |
| 10 | −49.74000 | 0.39300 | 15.60 | | | |
| 11 | STOP | 3.91000 | 14.60 | | | (St) |
| 12 | −27.61000 | 0.49000 | 14.20 | 1.78472 | 25.68 | L6 |
| 13 | 44.20000 | 0.15000 | 14.80 | | | |
| 14 | 19.00000 | 5.13000 | 15.80 | 1.49700 | 81.54 | L7 |
| 15 | −22.04000 | 0.15001 | 16.40 | | | |
| 16 | 37.24000 | 7.34000 | 16.00 | 1.80809 | 22.76 | L8 |
| 17 | −10.61000 | 1.20000 | 16.20 | 1.90200 | 25.26 | L9 |
| 18 | 29.28000 | 1.63000 | 17.40 | | | |
| 19 | 37.66000 | 2.95000 | 19.20 | 1.89286 | 20.36 | L10 |
| 20 | 174.10000 | 10.78000 | 19.60 | | | |
| 21 | −11.35000 | 1.20000 | 21.40 | 1.53172 | 48.84 | L11 |
| 22 | −16.50000 | 18.64000 | 25.60 | | | |

# Fig. 3

| No. | K | A | B | C | D | E |
|---|---|---|---|---|---|---|
| 14 | 0.0000 | −1.0953e−005 | 1.5378e−007 | −1.4224e−009 | 3.8014e−011 | −2.4409e−013 |
| 15 | 0.0000 | 3.3567e−005 | 1.2702e−007 | −1.5210e−009 | 4.3185e−011 | −3.3170e−013 |

Fig. 4

SPHERICAL ABERRATION
(mm)

ASTIGMATISM
(mm)

DISTORTION
(%)

# Fig. 5

TANGENTIAL                                      SAGITTAL

RELATIVE FIELD HEIGHT 1.00
(42.73)°

RELATIVE FIELD HEIGHT 0.80
(36.42)°

RELATIVE FIELD HEIGHT 0.60
(28.82)°

RELATIVE FIELD HEIGHT 0.40
(20.01)°

RELATIVE FIELD HEIGHT 0.00
(0.000)°

# Fig. 6

Fig. 7

| SURFACE S (No.) | RADIUS OF CURVATURE R (mm) | DISTANCE d (mm) | EFFECTIVE DIAMETER De(mm) | REFRACTIVE INDEX nd | ABBE NUMBER ν d | LENS |
|---|---|---|---|---|---|---|
| 1 | 166.03000 | 2.52000 | 37.40 | 1.63854 | 55.38 | L1 |
| 2 | 243.97000 | 0.15000 | 35.20 | | | |
| 3 | 45.33000 | 1.00000 | 30.80 | 1.48749 | 70.24 | L2 |
| 4 | 12.57000 | 7.20000 | 22.80 | | | |
| 5 | 249.45000 | 1.20000 | 22.60 | 1.48749 | 70.24 | L3 |
| 6 | 17.23000 | 4.07000 | 20.40 | | | |
| 7 | 29.21000 | 3.62000 | 20.30 | 1.90200 | 25.26 | L4 |
| 8 | 166.56000 | 5.31000 | 19.50 | | | |
| 9 | 27.29000 | 4.30000 | 15.40 | 1.49700 | 81.54 | L5 |
| 10 | −26.81000 | 0.32000 | 15.60 | | | |
| 11 | STOP | 4.29000 | 14.10 | | | (St) |
| 12 | −26.67000 | 1.00000 | 14.10 | 1.78472 | 25.68 | L6 |
| 13 | 31.44000 | 0.15000 | 14.90 | | | |
| 14 | 19.90000 | 5.57000 | 15.80 | 1.49700 | 81.54 | L7 |
| 15 | −17.09000 | 1.26000 | 17.00 | | | |
| 16 | 67.61000 | 8.70000 | 17.30 | 1.80809 | 22.76 | L8 |
| 17 | −10.04000 | 1.20000 | 17.80 | 1.90200 | 25.26 | L9 |
| 18 | 40.67000 | 1.40000 | 20.20 | | | |
| 19 | 38.25000 | 3.34000 | 22.80 | 1.89286 | 20.36 | L10 |
| 20 | 171.20000 | 14.30000 | 23.30 | | | |
| 21 | −14.32000 | 1.20000 | 26.50 | 1.53172 | 48.84 | L11 |
| 22 | −20.58000 | 13.31160 | 31.20 | | | |

Fig. 8

| No. | K | A | B | C | D | E |
|---|---|---|---|---|---|---|
| 14 | 0.0000 | −5.3838e-006 | 1.3537e-007 | −2.5081e-009 | 5.4731e-011 | −3.4532e-013 |
| 15 | 0.0000 | 3.7032e-005 | 1.1075e-007 | −8.5114e-010 | 5.5184e-011 | −4.2236e-013 |

# Fig. 9

SPHERICAL ABERRATION
(mm)

ASTIGMATISM
(mm)

DISTORTION
(%)

Fig. 10

TANGENTIAL                                        SAGITTAL

0.05                                              0.05
        RELATIVE FIELD HEIGHT 1.00
              (42.72)°
-0.05                                             -0.05

0.05                                              0.05
        RELATIVE FIELD HEIGHT 0.80
              (36.32)°
-0.05                                             -0.05

0.05                                              0.05
        RELATIVE FIELD HEIGHT 0.60
              (28.72)°
-0.05                                             -0.05

0.05                                              0.05
        RELATIVE FIELD HEIGHT 0.40
              (19.96)°
-0.05                                             -0.05

0.05                                              0.05
        RELATIVE FIELD HEIGHT 0.00
              (0.000)°
-0.05                                             -0.05

## INTERNATIONAL SEARCH REPORT

| International application No. |
|---|
| PCT/JP2017/033452 |

| A. CLASSIFICATION OF SUBJECT MATTER |
|---|
| Int.Cl. G02B13/04(2006.01)i, G02B13/18(2006.01)i |
| |
| According to International Patent Classification (IPC) or to both national classification and IPC |

| B. FIELDS SEARCHED |
|---|
| Minimum documentation searched (classification system followed by classification symbols) |
| Int.Cl. G02B13/04, G02B13/18 |

Documentation searched other than minimum documentation to the extent that such documents are included in the fields searched

| | |
|---|---|
| Japanese Published Examined Utility Model Applications | 1922–1996 |
| Japanese Published Unexamined Utility Model Applications | 1971–2017 |
| Japanese Examined Utility Model Registrations | 1996–2017 |
| Japanese Registered Utility Model Specifications | 1994–2017 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 8-029688 A (CANON INC.) 02 February 1996, examples 1-2, 4, etc. & US 6028716 A, examples 6-7, 9, etc. | 1-7, 10<br>9<br>8 |
| X<br>Y<br>A | JP 2006-178244 A (NIDEC COPAL CORPORATION) 06 July 2006, examples 1-2, etc. (Family: none) | 1, 4-5, 7-8, 10<br>9<br>2-3, 6 |

☒ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 December 2017 (05.12.2017) | 12 December 2017 (12.12.2017) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

International application No.

PCT/JP2017/033452

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | JP 6-214156 A (NIKON CORP.) 05 August 1994, examples 1-5, etc. (Family: none) | 1, 4-7, 10<br>9<br>2-3, 8 |
| X<br>Y<br>A | JP 8-062499 A (CANON INC.) 08 March 1996, examples 1-6, etc. (Family: none) | 1, 6-8, 10<br>9<br>2-5 |
| X<br>Y<br>A | JP 63-139314 A (OLYMPUS OPTICAL CO., LTD.) 11 June 1988, examples 1-7, etc. (Family: none) | 1, 6-7, 10<br>9<br>2-5, 8 |
| X<br>Y<br>A | JP 2001-290076 A (NIKON CORP.) 19 October 2001, examples 2-4, etc, (Family: none) | 1, 5, 7, 10<br>9<br>2-4, 6, 8 |
| X<br>Y<br>A | JP 5-313065 A (CANON INC.) 26 November 1993, examples 1-5, etc. (Family: none) | 1, 4-5, 7, 10<br>9<br>2-3, 6, 8 |
| X<br>Y<br>A | JP 6-300972 A (CANON INC.) 28 October 1994, examples 3-4, etc. & US 5574599 A, examples 11-12, etc. | 1, 4-5, 7, 10<br>9<br>2-3, 6, 8 |
| Y | JP 2013-231941 A (RICOH IMAGING CO., LTD.) 14 November 2013, paragraphs [0010], [0017], example 1, etc. & US 2013/0265648 A1, paragraphs [0011], [0017], example 1, etc. | 9 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014085429 A